## Europäisches Patentamt
## European Patent Office
## Office européen des brevets

(19)

(11) Numéro de publication: **0 024 238 B1**

(12) **FASCICULE DE BREVET EUROPEEN**

(45) Date de publication du fascicule du brevet: **05.02.86**

(51) Int. Cl.⁴: **B 65 G 45/00**

(21) Numéro de dépôt: **80401162.5**

(22) Date de dépôt: **07.08.80**

(54) **Procédé de nettoyage de bandes transporteuses par vibration d'un câble ou faisceau de câbles.**

(30) Priorité: **10.08.79 FR 7920487**

(43) Date de publication de la demande: **25.02.81 Bulletin 81/8**

(45) Mention de la délivrance du brevet: **05.02.86 Bulletin 86/6**

(84) Etats contractants désignés: **AT DE FR NL SE**

(56) Documents cités:
**EP - A - 0 003 462**
**FR - A - 1 420 666**
**FR - A - 2 163 728**
**FR - A - 2 264 743**
**US - A - 2 885 069**

(73) Titulaire: **Chouteau, Henri Paul, Villa Bel Air Montgobert, F-02600 Villers-Cotterets (FR)**
Titulaire: **Lagros, Gilbert Henri, 4 rue Nahan, F-54490 Piennes (FR)**

(72) Inventeur: **Chouteau, Henri Paul, Villa Bel Air Montgobert, F-02600 Villers-Cotterets (FR)**
Inventeur: **Lagros, Gilbert Henri, 4 rue Nahan, F-54490 Piennes (FR)**

(74) Mandataire: **Richebourg, Michel François et al, Cabinet Beau de Loménie 55, rue d'Amsterdam, F-75008 Paris (FR)**

# 0 024 238

## Description

La présente invention concerne un dispositif de nettoyage d'une extrême simplicité, visant à éliminer les dépôts de produits qui subsistent sur la bande transporteuse.

Un mauvais nettoyage conduit comme on le sait à la dégradation de la bande transporteuse.

On a proposé dans l'état de la technique des systèmes à racles, brosses, etc. qui sont peu efficaces, usent et abiment la bande, doivent être remplacés souvent et perdent vite leur efficacité.

Le nettoyage des bandes transporteuses par fil métallique, corde à piano, câble est connu également depuis longtemps. La plupart des dispositifs situent ce fil ou câble sur la périphérie du tambour de tète. Le fil est soit immobile, soit animé d'un mouvement de va et vient, transversalement par rapport à la bande.

Mais ces procédés se révèlent peu satisfaisants: en effet, si la pression du fil exercée contre la bande est faible, l'efficacité du nettoyage est pratiquement nulle et si la pression exercée est forte, l'usure du fil est très rapide, entraînant des interventions fréquentes pour son réglage ou son remplacement.

La présente invention a pour but d'accroitre l'efficacité du nettoyage en réalisant un mouvement spécial de vibration du càble ou fil (et de diminuer considérablement les interventions, qui sont toujours une source importante d'accidents), par la réalisation d'un dispositif approprié.

Les particules gènantes à éliminer sont soumises à quatre forces principales : leur poids, leur inertie, leur adhérence proprement dite à la bande et leur adhérence entre elles. placé au contact de la bande, un câble au repos ou animé d'un mouvement suivant son axe ne permet de vaincre que les forces d'inertie et partiellement d'adhérence à la bande. En effet les particules rencontrant l'obstacle créé par le câble, s'agglutinent sur celui-ci et finissent par passer entre la bande et lui. En créant la vibration du càble, on a donc cherché à libérer celui-ci des agglomérats qui se trouvent ainsi disloqués.

Dans l'état de la technique, les vibrations peuvent etre obtenues de multiples façons à partir de diverses sources émettrices : électro-aimant, moteur à balourd, etc.

Il a été découvert que, de manière surprenante, il est possible de se servir de la résistance exercée par la bande transporteuse. En effet, il a été découvert que le relevage transversal des bords de la bande crée sur le câble qui la sous-tend une variation longitudinale, c'est-à-dire le long du càble, de l'effort de frottement. Cet effort dont l'amplitude minimale se situe sensiblement sur l'axe de la bande, a pour effet de créer des vibrationsdu càble dans le plan d'avancement de la bande. L'explication en est complexe, comme tout phénomène vibratoire. L'élément déterminant semble etre les variations longitudinales des forces de frottement du câble, dûes à la courbure meme de la bande (accroissement de la tension interne sur les bords de la bande). L'ensemble de ces forces provoque des déformations élastiques complexes du câble entrainant son 'décrochage' périodique et sa vibration.

L'invention vise un procédé de nettoyage de bandes transporteuses (I) par câble disposé transversalement par rapport au sens de défilement de la bande, entre deux points d'appui (C) indépendants de la bande, au contact de la face inférieure de la bande retour, caravtérisé en ce que l'on provoque le relèvement des bords latéraux de la bande retour par: a) disposition de chaque point d'appui du câble légèrement au-dessus du plan matérialisé par la bande retour au repos -c'est-à-dire lorsqu'elle n'est soumise à aucune contrainte de la part du câble- et b) tension du câble, qui exerce ainsi une pression en chaque point de toute la largeur de la bande, ladite pression passant par une valeur minimale au niveau de l'axe de symétrie longitudinal de ladite bande, de manière à provoquer la mise en vibration efficace du câble, chaque point du câble étant ainsi animé d'un mouvement oscillant dans la direction de défilement de la bande tout en restant en contact étroit avec la partie de ladite bande qui lui correspond.

On a découvert que l'on obtenait ainsi, non pas une déformation permanente du câble dans le sens de défilement du brin de retour, mais au contraire un mouvement d'oscillation du câble d'avant en arriere et inversement par rapport au défilement de la bande, le cable restant sensiblement au contact du brin de retour et assurant donc un nettoyage très efficace.

Il a également été constaté que, contrairement à ce que pensait l'homme du métier, une forte pression exercée par le câble sur la bande ne provoque pas toujours une forte usure du câble et/ou de la bande. Au contraire, de manière tout à fait surprenante, le dispositif selon l'invention, malgré la très forte pression qu'il utilise réduit l'usure du câble et de la bande.

Comme dispositif d'appui, on a utilisé notamment des poulies de guidage du câble. En disposant d'une manière connue un système de poulies de renvoi de câble, on peut mettre en oeuvre un faisceau de portions parallèles du câble, ce qui augmente naturellement l'efficacite.

On peut ainsi nettoyer des bandes caoutchoutées (armature textile, plastique ou métallique). Ces bandes ne doivent pas présenter d'aspérités : élimination des bandes à chevrons et des raccordements par agrafes.

Tous les câbles ordinaires ou fils, ou treillis peuvent convenir : le matériau constitutif et le diamètre interviennent sur la vitesse d'usure donc sur l'autonomie d'une bobine de rechange.

Les meilleurs résultats ont été obtenus avec un câble en acier de diamètre 6 à 8 mm avec un fil de base de 7/10 mm.

Le relevage des bords de la bande et la tension du câble sont les éléments essentiels du réglage du dispositif. Cette tension doit permettre le relevage des bords à la valeur choisie. L'ordre de grandeur est de 1 000 N (100 kgf) pour des largeurs de bandes inférieures à 1 000 mm et 2 à 3 000 N pour des largeurs supérieures.

Un relevage des bords de la bande de 1 à 2 % de sa largeur donne généralement les meilleurs résultats. 10 % parait être un maximum.

0 024 238

Il n'a pas été possible de définir une vitesse limite de défilement : en fait, aux vitesses habituelles de défilement, de l'ordre de 0,2 - 1 m/s, le dispositif selon l'invention est efficace, et couramment jusqu'à 1,5 - 3 m/s.

Avec quatre brins de renvoi d'un même câble tendus entre des poulies en travers de la bande, on est parvenu à un taux d'élimination des matières résiduaires de plus de 95 % quel que soit le produit usuel transporté, dans les conditions ci-dessus.

Ces produits sont les produits pulvérulents plus ou moins agglomérés comme le sable, le coke, le charbon, la terre, les cendres, les argiles, et particulièrement les produits de cimenterie.

On peut renouveler la ou les portion(s) de câble en action par simple défilement du câble entre une bobine émettrice et une bobine réceptrice ; le renouvellement représente avantageusement environ 1 % du taux de marche de l'installation : l'usure est alors minimale et l'entretien pratiquement nul.

D'autres caractéristiques et avantages de l'invention seront mieux comprises à l'aide du dessin annexé, sur lequel :

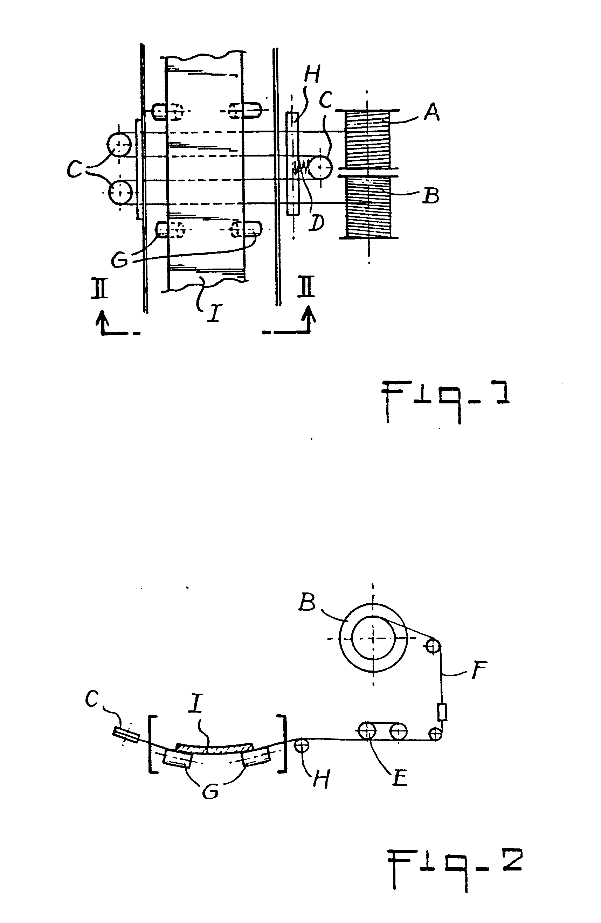

- la figure 1 représente une vue de dessus du dispositif préféré, schématiquement;
- la figure 2 représente schématiquement le dispositif de la figure 1 ; en coupe selon II-II.

Entre les deux bobines, une série classique de poulies de renvoi (C) permet de multiplier le nombre de brins en service sous le brin de retour de la bande transporteuse (I) et d'obtenir ainsi le degré d'efficacité de nettoyage souhaité. Un amortisseur placé sur le cheminement du câble, et qui peut etre constitué par un ressort (D) ou tout autre système, permet la détente contrôlée du câble lors d'un impact important ou du passage d'un corps etranger, assurant ainsi une certaine sécurité d'utilisation et protection de la bande transporteuse.

Le faisceau de brins ainsi constitué est ensuite positionné et tendu de façon à assurer un certain relevage des bords de la bande jusqu'à l'obtention du degré de vibration souhaité, comme indiqué ci-dessus.

Ce relevage s'effectue par un simple positionnement en hauteur de l'appareil avec éventuellement l'adjonction d'un ou plusieurs rouleaux support (H). Pour des bandes plus rigides, la mise en place de rouleaux releveurs (G) est possible.

Le renouvellement du câble s'effectue par l'entrainement de la bobine (B). L'autonomie du dispositif ne dépend que de la longeur du câble stocké sur la bobine (A), qui peut atteindre plusieurs centaines de mètres. Les opérations d'entretien, toujours dangeureuses, peuvent être ainsi supprimées pendant plus d'une annee.

L'enroulement du câble sur la bobine (B) se fait par l'intermédiaire d'un moto-réducteur, ou autre système (roue à cliquet par exemple) qui agit, d'une part sur un cabestan (E) muni d'un système de freinage réglable assurant une tension et une vistesse de déroulement constantes du câble et d'autre part sur la bobine (B) par l'intermédiaire d'un limiteur de couple permettant de compenser les variations de vitesse linéaire du câble sur la bobine. Le guidage du câble lors de l'enroulement se fait par l'intermédiaire d'un bras mobile (F).

Un jeu d'horloge et minuterie reglables asservies à la marche de la bande transporteuse, permet de déclencher le cycle de renouvellement du câble en fonction de son usure. Ce cycle peut être continu.

Le déclenchement du cycle peut egalement se faire à partir d'un système quelconque mesurant l'usure réelle du câble.

Avec 400 m de câble, on est parvenu à un fonctionnement d'au moins 2000 heures sans aucune intervention manuelle.

## Revendications

1. Procédé de nettoyage de bandes transporteuses (I) par cable disposé transversalement par rapport au sens de défilement de la bande, entre deux points d'appui (C) indépendants de la bande, au contact de la face inférieure de la bande retour, caractérisé en ce que l'on provoque le relèvement des bords latéraux de la bande retour par :
a) disposition de chaque point d'appui du cable légèrement au-dessus du plan matérialise par la bande retour au repos - c'est-à-dire lorsqu'elle n'est soumise à aucune contrainte de la part du cable - et
b) tension du cable qui exerce ainsi une pression en chaque point de toute la largeur de la bande, ladite pression passant par une valeur minimale au niveau de l'axe de symétrie longitudinal de ladite bande de manière à provoquer la mise en vibration efficace du cable, chaque point du cable étant ainsi animé d'un mouvement oscillant dans la direction de défilement de la bande tout en restant en contact étroit avec la partie de ladite bande qui lui correspond ,

2. Procédé selon la revendication 1, caractérisé en ce que l'on utilise plusieurs cables agissant comme indiqué à la revendication 1, disposés sensiblement parallèlement les uns aux autres dans le sens de défilement de la bande.

3. procédé selon la revendication 2, caractérisé en ce que lesdits cables sont en fait formés par un seul cable dont on assure par des points d'appui (C) appropriés plusieurs fois, le renvoi transversalement par rapport à la bande (I), chaque point d'appui étant disposé légèrement au-dessus du plan matérialisé par la bande retour au repos, c'est-à-dire lorsqu'elle n'est soumise à aucune contrainte de la part des cables.

4. Procédé selon la revendication 3, caractérisé en ce que les points d'appui consistent en poulies de renvoi (C) dont certaines peuvent être montées élastiquement.

5. Procédé selon l'une quelconque des revendications 1 à 4, caractérisé en ce que le cable peut défiler

3

discontinu, à partir d'une bobine émettrice (A) et vers une bobine réceptrice (B).

6. Procédé selon l'une quelconque des revendications 1 à 5, caractérisé en ce qu'une partie du relevement des bords de bande par le cable est prise en charge par des rouleaux porteurs latéraux.

**Patentansprüche**

1. Verfahren zur Reinigung von Förderbändern (L) durch ein Kabel, welches quer zur Laufrichtung des Bandes, zwischen zwei getrennten Stützpunkten (C) des Bandes, in Berührung mit der Lnnenseite des Rücklaufbandes angeordnet ist, <u>dadurch gekennzeichnet, dass</u> das Aufrichten der Seitenränder des RückLaufbandes durch

a) Anordnung jedes Stützpunktes des Kabels etwas über der Ebene, die durch das Rücklaufband im Ruhezustand entsteht, d.h. wenn es keiner Beanspruchung durch das Kabel unterworfen ist - und

b) Spannung des Kabels, welches somit an jeder Stelle der Gesamtlänge des Bandes einen Druck ausübt, wobei der genannte Druck einen Mindestwert im Bereich der Symmetrie-Längsachse des genannten Bandes durchläuft, wobei somit jede Stelle des Kabels von einer Schwingungsbewegung in Laufrichtung des Bandes angetrieben wird, unter Bewahrung einer engen Berührung mit dem ihm entsprechenden Teil des genannten Bandes bewirkt wird.

2. Verfahren nach Anspruch 1, dadurch gekennzeichnet, dass mehrere Kabel benutzt werden, die wie in Anspruch 1 angegeben wirken und deutlich parallel zueinander in Laufrichtung des Bandes angeordnet sind.

3. Verfahren nach Anspruch 2, dadurch gekennzeichnet, dass die genannten Kabel tatsächlich von einem einzigen Kabel gebildet werden, dessen Rücksendung quer zum Föderband (L) mehrere Male durch zweckmässige Stützpunkte (C) sichergestellt wird, wobei jeder Stützpunkt etwas über der Ebene angeordnet ist, die durch das Rücklaufband im Ruhezustand entsteht, d.h. wenn es keiner Beanspruchung durch das Kabel unterworfen ist.

4. Verfahren nach Anspruch 3, dadurch gekennzeichnet, dass die Stützpunkte aus FührungsroLlen (C) bestehen, von denen gewisse Rollen federnd gelagert sein können.

5. Verfahren nach einem der Ansprüche 1 bis 4, dadurch gekennzeichnet, dass das Kabel quer zum Förderband, fortlaufend oder unterbrochen, von einer Abgabespule (A) und bis zu einer Aufnahmespule (B) laufen kann.

6. Verfahren nach einem der Ansprüche 1 bis 5, dadurch gekennzeichnet, dass ein Teil des Aufrichtens der Bandränder durch das Kabel von seitlichen Tragrollen übernommen wird.

**Claims**

1. Process for cleaning conveying belts (I) by means of a cable disposed transversaly with respect to the moving direction of the belt, between two independant supporting points (C) of the belt, contactina with the lower face of the return belt, characterized in that the lateral edges of the return belt are turned up by:

a) placing each supporting point of the cable slightly above the plane delimited by the inoperative return belt, i.e. when said belt is not subjected to any strain from the cable, and

b) tensioning the cable, thus exerting a pressure on each point of the whole bent lenght, said pressure going through a minimal value at the level of the longitudinal symmetry axis of said belt, so as to cause efficient vibrating of the cable, every point of the cable being thus imparted with an oscillating movement in the moving direction of the belt while remaining in close contact with the part of the belt corresponding thereto.

2. Process according to claim 1, characterized in that a plurality of cables, acting as indicated in claim 1, are used, and placed substantially parallel one to the other in the belt moving direction.

3. Process according to claim 2, characterized in that said cables are in fact constituted by a single cable, of which transversal return with respect to the belt (1) is ensured several times by means of appropriate supporting points (C), each supporting point being disposed slightly above the plane delimited by the inoperative return belt, i.e. when it is not subjected to any strain from the cable.

4. Process according to claim 3, characterized in that the supporting points consist in return pulleys (C), some of which can be elastically mounted.

5. Process according to any one of claims 1 or 4, characterized in that the cable can move transversaly with respect to the belt, in continous or discontinnous manner, from a supply reel (A) towards a receiving reel (B).

6. Process according to any one of claims 1 to 5, charaterrized in that a part of the turning up of the belt edges by the cable is carried out via lateral carrying rollers.

Fig-1

Fig-2